# DEMANDE DE BREVET EUROPEEN

(11) **EP 1 143 743 A1**
(43) Date de publication de la demande: **10.10.2001**
(21) Numéro de dépôt: 01400322.2
(22) Date de dépôt: 08.02.2001
(51) Int. Cl.: H04N 9/29

(54) **Téléviseur muni d'un moyen de démagnétisation et procédé de montage d'un tel téléviseur**

(30) Priorité: 07.03.2000 FR 0002934
(71) Demandeur: SAGEM SA, 75116 Paris (FR)
(72) Inventeur: Poggi, M. Philippe, 75016 Paris (FR)
(74) Mandataire: Schmit, Christian Norbert Marie

(57) **Abrégé**

Téléviseur (1) comportant un boîtier (2), un tube cathodique (5) et un moyen de démagnétisation (9), tel que le tube cathodique est retenu à l'intérieur du boîtier par une ceinture montée autour du tube et elle-même retenue par des moyens de fixation (13) sur le boîtier. Le moyen de démagnétisation est monté a posteriori autour des moyens de fixation utilisés pour retenir le tube cathodique dans le boîtier. Le moyen de démagnétisation est préférentiellement élastique de manière à être tendu entre les différents moyens de fixations. Le moyen de démagnétisation comporte des extrémités (19) qui entourent chacune un des moyens de fixation.

## Description

La présente invention a pour objet un téléviseur muni d'un moyen de démagnétisation. Elle a également pour objet un procédé de montage d'un téléviseur comportant un tel moyen de démagnétisation. Elle trouve plus particulièrement son utilisation dans le cadre d'une optimisation de la disposition, et du montage, d'un moyen de démagnétisation sur un tube cathodique contenu à l'intérieur d'un téléviseur. L'invention permet notamment un montage aisé du tube cathodique et du moyen de démagnétisation dans les téléviseurs.

Dans l'état de la technique, on connaît un téléviseur comportant notamment un tube cathodique et un boîtier pour recevoir ce tube cathodique. Le boîtier comporte une fenêtre pour y présenter un écran du tube cathodique. Le tube cathodique est un élément lourd et encombrant. Il doit donc être solidement retenu dans le boîtier du téléviseur. On connaît en particulier, dans l'état de la technique, une ceinture entourant le tube cathodique, telle que la ceinture est solidement montée, de manière mécanique, sur un pourtour de la fenêtre du boîtier. La ceinture est par exemple vissée dans des colonnettes présentées sur ce pourtour. La ceinture comporte, par exemple, des oreilles latérales. Une oreille est une extension plane, telle que cette extension plane a une forme compatible pour venir s'appuyer sur les colonnettes du boîtier. Ainsi, lorsque l'on dispose le tube cathodique dans le boîtier, on s'arrange pour placer chaque oreille au-dessus d'une colonnette.

Un tube cathodique émet un champ magnétique autour de lui. Pour que ce champ magnétique n'interfère pas avec des fonctions mises en oeuvre par d'autres moyens du téléviseur, ni avec d'autres éléments externes qui pourraient être placés à proximité de ce téléviseur, on dispose des moyens de démagnétisation sur le tube cathodique.

Dans l'état de la technique, un moyen de démagnétisation comporte par exemple des anneaux, tels que chaque anneau peut être disposé autour d'une oreille de la ceinture. Un anneau disposé autour d'une oreille, dans l'état de la technique comporte alors une première portion placée au-dessus d'un plan formé par la ceinture autour du tube cathodique, et une deuxième portion placée sous ce plan. Le plan passe en particulier par au moins deux oreilles de la ceinture.

Le moyen de démagnétisation peut par exemple être une tresse telle que cette tresse comporte un noeud central à partir duquel partent des branches de tresse, chacune de ces branches de tresse étant alors munie à une extrémité d'un anneau. Dans un exemple, la tresse comporte trois branches et on dispose les trois anneaux de la tresse de démagnétisation autour de trois oreilles du tube cathodique. Etant donné que la deuxième portion de chaque anneau doit être disposée sous le plan, le moyen de démagnétisation doit donc être monté au préalable, c'est à dire avant le montage du tube cathodique sur les colonnettes du boîtier. En effet, si le tube cathodique est monté sans le moyen de démagnétisation sur les colonnettes, alors il n'est plus possible de coulisser les anneaux autour des oreilles, car celles-ci reposent alors sur les colonnettes.

Dans l'état de la technique, un manutentionnaire chargé de mettre en place le tube cathodique dans le boîtier du téléviseur doit faire également preuve d'une grande précision pour assurer le maintien en place du moyen de démagnétisation sur le tube cathodique lors de sa manutention. Or, un tube cathodique est un élément lourd, il peut peser jusqu'à 35 kg. Un manutentionnaire doit donc également développer une force importante pour pouvoir soulever et déplacer ce tube cathodique. De plus, le tube cathodique présente peu de prises, donc les oreilles de la ceinture peuvent constituer préférentiellement des prises pour ce manutentionnaire. Ainsi, lorsque le manutentionnaire prend en main le tube cathodique, il défait parfois le moyen de démagnétisation du tube cathodique. Lorsque cela arrive, le manutentionnaire est obligé de reposer le tube cathodique, de manière à repositionner le moyen de démagnétisation correctement sur le tube cathodique.

Les téléviseurs de l'état de la technique posent donc un problème lors de leur montage. En effet, il y a une incompatibilité entre d'une part la précision et la minutie nécessaires pour réaliser une mise en place correcte d'un moyen de démagnétisation sur un tube cathodique à monter dans un boîtier de téléviseur, et d'autre part avec la force nécessaire à mettre en oeuvre pour déplacer et monter le tube cathodique dans le boîtier. En effet, on ne peut pas obtenir une grande force de déplacement tout en maintenant une qualité de précision et de minutie quant à ce déplacement. Il apparaît, dans l'état de la technique, que cette étape de montage constitue une perte de temps considérable du fait qu'il est parfois nécessaire de reposer le tube cathodique pour y réinstaller le moyen de démagnétisation.

De plus, à chaque fois que nécessaire, le manutentionnaire doit poser puis relever le tube cathodique qui pèse lourd. Le nombre de fois où le moyen de démagnétisation se détache du tube cathodique lors de cette manutention est d'autant plus important que le tube cathodique présente peu de moyens de préhension. Or, les oreilles sur lesquelles sont fixés les anneaux du moyen de démagnétisation peuvent constituer ces moyens de préhension.

L'invention a pour objet de remédier au problème cité en proposant notamment un téléviseur muni d'un boîtier et d'un tube cathodique, lequel tube cathodique est muni d'un moyen de démagnétisation, tel que l'on peut installer le moyen de démagnétisation sur le tube cathodique après que le tube cathodique ait été placé dans le boîtier. En effet, dans l'invention, le moyen de démagnétisation n'est plus retenu sur le tube cathodique par le tube cathodique lui-même, ni par une ceinture montée autour du tube cathodique, mais par des moyens de fixation du tube cathodique sur le boîtier. Le tube cathodique est monté dans le boîtier de telle sorte qu'un écran du tube cathodique est présenté dans une fenêtre du boîtier, et tel que la ceinture est appuyée contre un pourtour de cette fenêtre.

Ces moyens de fixation permettent de retenir le moyen de démagnétisation au-dessus d'un plan formé par la ceinture du tube cathodique. En effet, le moyen de démagnétisation comporte des extrémités telles que ces extrémités peuvent être traversées par les moyens de fixation. Dans un exemple préféré, les moyens de fixations sont des vis et chaque extrémité comporte une ouverture permettant d'être traversée par une vis. Dans une variante, chaque extrémité peut être perforée par une vis lors de son vissage dans le boîtier.

D'autre part dans l'invention, on prévoit de séparer très nettement l'étape dans laquelle une force considérable est nécessitée pour déplacer et monter le tube cathodique dans le boîtier, et d'autre part une étape où une minutie et une précision sont demandées pour installer le moyen de démagnétisation sur le tube cathodique. Ces deux étapes peuvent ensuite être significativement distinguées lors d'un montage complet d'un téléviseur. Ainsi le montage du tube cathodique dans le boîtier constitue une tâche de manutention, alors que le montage du moyen de démagnétisation sur le tube cathodique constitue une tâche d'équipement.

L'invention a donc pour un téléviseur comportant un boîtier, un tube cathodique et un moyen de démagnétisation monté sur le tube cathodique, le tube cathodique étant entouré d'une ceinture de telle sorte que des moyens de fixation du téléviseur assurent la rétention de la ceinture sur le boîtier, caractérisé en ce que le moyen de démagnétisation comporte des extrémités de rétention de telle sorte que ces extrémités de rétention entourent des tronçons des moyens de fixation.

L'invention a également pour objet un procédé de montage d'un téléviseur caractérisé en ce qu'il comporte les étapes suivantes :
- on dispose un tube cathodique du téléviseur dans un boîtier de ce téléviseur, puis
- on retient le tube cathodique dans le boîtier par des moyens de fixation coopérant avec une ceinture du tube et le boîtier, puis
- on place des extrémités de rétention d'un moyen de démagnétisation chacune autour d'un moyen de fixation.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une vue schématique éclatée d'un téléviseur selon l'invention à monter selon le procédé de l'invention;
- Figure 2 : un moyen de fixation selon l'invention.

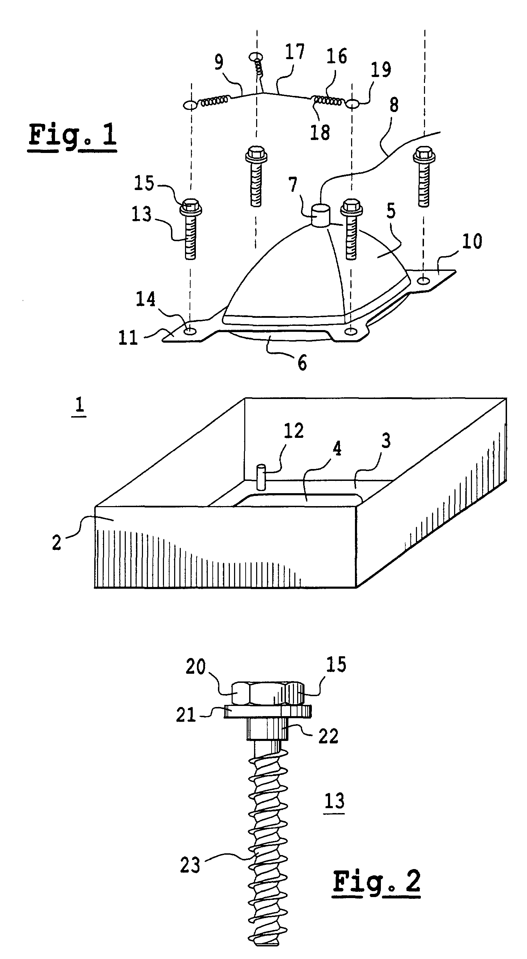

La figure 1 montre un téléviseur 1. Le téléviseur 1 comporte notamment un boîtier 2, tel que ce boîtier 2 est ouvert et présente sur un fond 3, une fenêtre 4. Le téléviseur 1 comporte aussi un tube cathodique 5. Le boîtier 2 a généralement une forme parallélépipédique et est ouvert au niveau d'une face opposée et parallèle au fond 3. La fenêtre 4 dans le fond 3 a généralement une forme rectangulaire, prévue pour recevoir, et présenter, un écran 6 du tube cathodique 5.

Le tube cathodique 5 comporte un canon à électrons 7, tel que ce canon à électrons 7 peut envoyer un flux d'électrons en direction de l'écran 6. Par le biais de bobines (non représentées), le canon à électrons 7 peut être déplacé selon deux axes orthogonaux, tels que ces deux axes sont parallèles à un plan formé par l'écran 6. Ainsi, le canon à électrons 7 peut émettre un faisceau d'électrons pointant sur différents points de l'écran 6.

Le tube cathodique 5 a globalement une forme de cône, telle qu'une extrémité de ce cône est formée par le canon à l'écran 7, et telle qu'une base du cône, opposée à cette extrémité, est formée par l'écran 6.

Le tube cathodique 5 est alimenté par un câble 8 avec de très hautes tensions. Le tube cathodique 5 est donc le siège de champs magnétiques puissants. Il est nécessaire de démagnétiser le tube cathodique 5 lorsque celui-ci est sous tension. Pour cela, on utilise un moyen de démagnétisation 9. Dans l'invention, un moyen de démagnétisation 9 est par exemple une tresse de masse métallique.

Le tube cathodique 5 est retenu dans le boîtier 2 par l'intermédiaire d'une ceinture 10. La ceinture 10 est montée préférentiellement autour de la base du cône, voire à la périphérie de l'écran 6. La ceinture 10 comporte des excroissances 11. Les excroissances 11 permettent la fixation de la ceinture 10 et donc du tube cathodique 5 dans le boîtier 2. En effet, les excroissances 11 peuvent être retenues sous des languettes de pression, ou par exemple être contraintes entre le fond 3 et un cadre externe qui viendrait s'appuyer sur la ceinture 10 en direction du fond 3. Dans un exemple préféré, l'excroissance 11 est vissée sur le fond 3. En effet, le fond 3 comporte préférentiellement des colonnettes 12 pour recevoir des vis 13 traversant les extrémités 11. Les colonnettes 12 sont préférentiellement dressées sur le fond 3 perpendiculairement à celui-ci, à des coins de la fenêtre 4. Généralement les extrémités 11 comportent chacune un orifice 14 pour être traversées par les vis 13 tel que chaque orifice 14 a un diamètre inférieur à un diamètre d'une tête de vis 15. Dans l'exemple préféré de l'invention, la ceinture 10 comporte quatre extrémités disposées préférentiellement aux quatre coins de l'écran 6, telle que les extrémités sont en vis à vis avec quatre colonnettes telles que 12 disposées aux quatre coins de la fenêtre 4 du fond 3.

Le tube cathodique 5 est lourd. Il peut peser jusqu'à 35 kilos. Selon l'invention, le tube cathodique 5 est monté dans le boîtier 2 au cours d'une première étape. En effet, l'opérateur déplace le tube cathodique 5 à l'intérieur du boîtier 2 de telle sorte que les orifices 14 des extrémités 11 sont en vis à vis avec les colonnettes 12. Ensuite, on visse les vis 13 dans les colonnettes 12 de telle sorte que les extrémités 11 soient retenues par les vis 13 sur les colonnettes 12. Ainsi dans une première étape, on fixe le tube cathodique 5 à l'intérieur du boîtier 2. Cette étape est principalement une étape de manutention.

Ensuite, on monte le moyen de démagnétisation 9 sur le tube cathodique 5. Pour cela, on utilise préférentiellement un moyen de démagnétisation 9 qui a une forme de tresse métallique. Dans un exemple préféré, cette tresse métallique est tri-axiale et comporte trois branches métalliques 17 reliées à un noeud central. Chacune des branches 17 est munie à une extrémité 16 d'un ressort 18. Ainsi, on peut tendre la tresse métallique 9 sur le tube cathodique 5. Dans cet exemple, on dispose chacune des trois extrémités 16 de la tresse métallique 9 autour d'une vis 13 montée dans une colonnette 12.

Pour retenir la tresse 9 sur le tube cathodique 5 la tresse 9 comporte des anneaux 19. En effet, on dispose chaque anneau 19 autour d'une vis 13, légèrement en dessous de la tête de vis 15 de la vis 13. Dans un exemple, les anneaux 19 sont des pièces indépendantes, soudées chacune à une extrémité des branches 17. Dans un deuxième exemple, les anneaux 19 peuvent être chacun constitués par un maillon des ressorts 18 respectivement disposés sur chacune des branches 17.

La figure 2 montre un exemple d'une vis 13 selon l'invention. Une telle vis 13 comporte une tête de vis 15, telle que la tête de vis 15 comporte une partie supérieure 20 de forme hexagonale, et un premier tronçon cylindrique 21 de diamètre légèrement supérieur à celui de la partie 20, et enfin un deuxième tronçon cylindrique 22 telle que ce deuxième tronçon cylindrique 22 a un diamètre inférieur à celui du premier tronçon cylindrique 21. Enfin, la vis 13 comporte une portion filetée 23 présentant un pas de vis. Dans l'invention, on visse la vis 13 dans une colonnette 12 de telle sorte que la portion filetée 23 soit complètement insérée à l'intérieur de la colonnette 12, et de telle sorte que les tronçons cylindriques 21 et 22, ainsi que la partie supérieure hexagonale 20, ne soient pas insérés à l'intérieur de la colonnette 12. Ainsi, dans un exemple préféré de l'invention, on dispose l'anneau 19 autour du tronçon cylindrique 22. Du fait de la présence des ressorts 18, la tresse 9 est élastique. Elle peut donc être tendue. Dans l'exemple préféré où la tresse est tendue élastiquement sur le tube cylindrique 5, l'anneau 19 a un diamètre supérieur au diamètre du premier tronçon cylindrique 21.

Dans une variante, la tresse 9 peut ne pas être élastique. Dans ce cas, en remplacement des anneaux 19, on utilise des crochets, disposés aux extrémités de chacune des branches.

Dans une variante de l'invention, les extrémités 11 de la ceinture 10 ne comportent pas d'orifice 14, mais ces orifices 14 sont formés par un vissage d'une vis telle quel 3. Les vis 13 sont alors, dans cette variante, des vis perforantes.

## Revendications

1. Téléviseur (1) comportant un boîtier (2), un tube cathodique (5) et un moyen de démagnétisation (9) monté sur le tube cathodique, le tube cathodique étant entouré d'une ceinture (10) de telle sorte que des moyens de fixation (13) du téléviseur assurent la rétention de la ceinture sur le boîtier, **caractérisé en ce que** le moyen de démagnétisation comporte des extrémités (16) de rétention (19) de telle sorte que ces extrémités de rétention entourent des tronçons (22) des moyens de fixation.

2. Téléviseur selon la revendication 1 **caractérisé en ce que** le moyen de démagnétisation est élastique et est tendu entre les moyens de fixation.

3. Téléviseur selon l'une des revendications 1 à 2 **caractérisé en ce que** le moyen de démagnétisation est une tresse de masse métallique triaxiale comportant trois extrémités, telle que chaque extrémité de la tresse est munie d'un ressort (18) présentant chacune un anneau (19), chaque anneau étant placé autour d'un moyen de fixation.

4. Téléviseur selon l'une des revendications 1 à 3 **caractérisé en ce que** les moyens de fixations sont des vis perforantes, vissées dans des colonnettes (12) du boîtier.

5. Procédé de montage d'un téléviseur **caractérisé en ce qu'**il comporte les étapes suivantes :
- on dispose un tube cathodique (5) du téléviseur (1) dans un boîtier (2) de ce téléviseur, puis
- on retient le tube cathodique dans le boîtier par des moyens de fixation (13) coopérant avec une ceinture (10) du tube et le boîtier, puis
- on place des extrémités (16) de rétention (19) d'un moyen de démagnétisation (9) chacune autour d'un moyen de fixation.

6. Procédé selon la revendication 5 **caractérisé en ce que**
- on perfore les oreilles du tube cathodique en montant les moyens de fixation dans des colonnettes (12) du boîtier.

7. Procédé selon l'une des revendications 5 à 6 **caractérisé en ce que**
- on enfonce partiellement les moyens de fixation de manière à laisser pour chacun un tronçon libre (22) du moyen de fixation dépassant au-dessus d'une excroissance (11) du tube cathodique de manière à pouvoir y retenir l'extrémité de rétention.

8. Procédé selon l'une des revendications 5 à 7 **caractérisé en ce que**
- on écarte élastiquement 18 les extrémités 16 du moyen de démagnétisation de manière à tendre le moyen de démagnétisation entre les moyens de fixation.

9. Procédé selon l'une des revendications 5 à 8 **caractérisé en ce que**
- on fixe trois extrémités du moyen de démagnétisation autour de trois moyens de fixation.
